(19) Europäisches Patentamt / European Patent Office / Office européen des brevets

(11) **EP 3 133 597 A1**

(12) **EUROPEAN PATENT APPLICATION**

(43) Date of publication:
**22.02.2017 Bulletin 2017/08**

(51) Int Cl.:
***G10L 19/018*** (2013.01)   ***G11B 20/00*** (2006.01)

(21) Application number: **15181611.3**

(22) Date of filing: **19.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Tracklib Holdings AB**
**141 40 Huddinge (SE)**

(72) Inventors:
• PHILIPSSON, Pia
  141 40 Huddinge (SE)
• JOHANSSON, Sten
  691 53 Karlskoga (SE)

(74) Representative: **Budde Schou A/S**
**Hausergade 3**
**1128 Copenhagen K (DK)**

(54) **METHOD AND APPARATUS FOR WATERMARKING OF AUDIO TRACKS**

(57) The present invention relates to a method of watermarking an audio track by providing a database structure, assigning a unique number X to the audio track and partitioning the unique number X into N positions i, and N values $v_i$, where $i=1...N$. For each position i of the number X, the method comprises generating a pseudorandom number $R(i, v_i)$ based on the position i and the value $v_i$ at the position i, adding a new node $[v_i, R(i,v_i)]$ at level i in the database structure, if not already present in the database structure, adding an edge from the preceding node $[v_i-1, R(i-1,v_{i-1})]$ to the new node $[v_i,R(i,v_i)]$, generating, by using $R(i, v_i)$ as a seed, a set of random complex numbers C, inserting the set into a vector V, calculating the inverse Fourier transform of vector V, and adding the thereby obtained time domain function y(t) to the audio track.

**Description**

Background of the invention

The music industry has in recent years been faced with new challenges and opportunities in relation to the transition from analog technologies to digital technologies when distributing music from the supplier to the consumer. The ability of using digital technologies for making perfect copies of music and the relative simplicity of distributing music over the Internet has made it much more difficult for creators of music and copyright holders to prevent illegitimate distribution of their intellectual property.

The term "audio track" as used herein is an audio file comprising one or more instruments/voices, which audio tracks are then mixed to form a song, whereas the term "audible data structure" as used herein represents the final audio file released by the owner of the audio tracks to the public for consumption, e.g. a song. An audible data structure as used herein may thus be made up of a plurality of audio tracks, and each of the audio tracks may have a different copyright holder. The number of audio tracks used for a single song may be up to the order of magnitude of about 10 audio tracks.

The term "watermark" or "watermarking" as used herein is understood to relate to the technology of adding an identifier to a single audio track. The identifier typically constitutes of a digital number having an order of magnitude of about 10 decimal digits. In the present context not all of the audio tracks of the song must include a watermark, i.e. some audio tracks may include a watermark whereas other audio tracks do not need to include a watermark. The audio tracks, i.e. both watermarked and non-watermarked audio tracks, may be mixed.

The watermarking should influence the quality and listening experience of the song to a minimum extent, while still being detectable and decodable using specific hardware and software. Optimally, the watermarking should not be audible to a human. The identifying digital number of each of the watermarked audio tracks of the song should be able to be retrieved with a high statistical certainty from the song, even if the song comprises several watermarked and non-watermarked audio tracks and even if the song has been filtered or converted, e.g. between different digital formats or from digital format to analog format or vice versa.

The technology of watermarking aims to solve the problem of how to be able to accurately identify and keep watch on individual audio tracks, for matters of copyright remuneration and other copyright issues, while opening up a new innovative market for sale or licensing of individual audio tracks which can be bought or licensed and then mixed into new and different songs by the buyer or licensee of the audio tracks. The technical field has been intensively studied in recent years, see the following brief description of some of the prior art technologies known to the applicant:

US8925102B2 discloses a system and method for allowing a mix artist to create a derivative work using different digital sources. A header of the derivative work is encrypted with IDs of the digital sources used in the derivative work.

US2013152210A1 discloses a method of embedding multiple watermarks, the watermarks being embedded in a coordinated fashion according to a predefined relationship between the watermarks in a domain, whereby the symbols of the watermarks do not overlap. Extraction of one of the watermarks allows simpler extraction of the other due to the relationship.

CN1870132A discloses a watermarking method for digital audio using a low density odd-even calibration code. A password k is used as a random seed for generating a spread-spectrum sequence b(k) with equal length to the watermark sequence, the sequence being with an odd-even calibration matrix to generate a protected watermark code sequence.

US8750630B2 discloses arranging watermarks in trees for defining hierarchical relationships between watermarks.

US8499159B2 discloses a method of embedding a watermark in an audio file. The audio file is divided into blocks and transformed by FFT. The watermark is created by modifying frequency coefficients of the audio file, the frequency coefficients being defined by a pseudo-random frequency hopping sequence created by using a pseudo random key and frequency band parameters.

EP0855681 B1 discloses a method of embedding information (watermark) wherein data is divided into blocks and subjected to orthogonal transformation (Fourier) for determining coefficients of the data. Coefficients in which the watermark data is to be embedded are selected using a random sequence generated by using an initial value. Information is embedded by quantizing the value of the coefficients, and inverse orthogonal transformation is subsequently performed to obtain modified blocks.

EP0766468B1 discloses a method of inserting a watermark into data by spectrally decomposing data and inserting the watermark data into the most perceptually significant frequency components before inverse transforming to obtain watermarked data.

US7844052B2 discloses a method of watermarking an item with a code word. A pseudo random number generator receives encrypted payload data and a fingerprint (watermark) key and generates the code word, the code word having a plurality of coefficients.

As the number of songs existing in the world probably exceeds 100 million, and each of the songs may be made up of a plurality of in the order of magnitude of about 10 audio tracks, there possibly may exist over 1 billion audio tracks or more in the world. Over 10.000 new songs are released every day on radio and over the internet with the use of music download or music streaming services. Even with the use of powerful computer technology, it will be very difficult to process all this information in order to find the identifying numbers of all watermarked audio tracks, which may possibly be included in the above songs.

It is therefore an objective according to the present invention to provide technologies for identifying watermarks in single audio tracks with a high statistical certainty while making efficient use of computer power and time.

Here follows a description of the mathematical background of the present invention together with references which may be used for understanding the theoretical background of the invention:

**Complex numbers**

A complex number is formally an ordered pair of real numbers. Apart from the multiplication of complex numbers, which is made according to specific rules, normal algebraic rules are used when complex numbers are used. Often, the complex number is described as (a,b), equivalent to a+ib, where a is designated the real part and b is designated the imaginary part. "i" is defined as the square root of -1, i.e. $i^2 = -1$.

An alternative way of describing complex numbers is r exp (i alpha), where r designates the amplitude and alpha designates the argument. The argument is typically measured in radians where $2\pi$ corresponds to 360°. Exp designates the exponential function $e^x$. Further, exp(i alpha) = cos (alpha) + i sin (alpha). Yet further, the complex number a-ib is the conjugate complex number to a+ib. Use of complex numbers simplifies calculations and may increase the understanding of complicated processes.

**Discrete Fourier transforms**

A digital sound file is represented by a large vector (1...N) of real numbers. A complex Fourier transform of a sequence of N real numbers is defined by:

$$X(k) = \sum x(j) \, W_N^{(j-1)(k-1)}$$

Where $W_N = e^{-2\pi i/N}$.
The summation is made from j=1 to j=N.
The inverse Fourier transform is defined as:

$$x(j) = 1/N \sum X(k) \, W_N^{-(j-1)(k-1)}$$

The summation is made from k=1 to k=N.
The above way of writing is used e.g. in the well known software tool MATLAB and starts the summation at k=1. Alternative ways of writing may be to start the numbering from 0 and end at N-1.
In order for the inverse Fourier transform to yield a real result, it is required that the coefficients X(k) are pair wise complex conjugated.
Generally, it then applies that X(N-k+2) = $\underline{X}$(k) where the underlining designates complex conjugation.
To calculate the Fourier transform according to the above definition requires in the order of $N^2$ multiplications. Faster algorithms for calculating Fourier transforms and inverse Fourier transforms have been developed based on Cooley-Tukeys Fast Fourier Transform (FFT). Thereby the number of multiplications may be reduced to the order of magnitude of N log (N), which constitutes a significant improvement compared to the above definition. In case N is a multiple of two, the calculation will be even faster.

**Basic probability theory**

If $\xi$ is a discrete random variable, its expectation value E is defined as:

$$\mu = E[\xi] = \sum x_i f_i$$

where $x_i$ describes all values that the random variable may assume, and $f_i$ describes the corresponding frequency or relative percentage.

The normalized function f(i) designates the probability density function. The successively accumulated sum of the probability density function is designated cumulative distribution function F(x). Thus, $F(x) = P(\xi <= x)$ is the probability of the random variable $\xi$ being less than or equal to x.

The value of F(x) increases monotonically from 0 to 1. The terms standard deviation and variance are used as a measure of expected statistical spread of the random variable about the expected value.

The variance is defined as:

$$Var[\xi] = E[(\xi-\mu)^2] = \sum (x_i-\mu)^2 f_i = E[\xi^2] - \mu^2$$

The standard deviation $\sigma$ is defined as the square root of the variance. Further:

$$E[a\xi] = aE[\xi] \text{ och } Var[a\xi] = a^2 Var[\xi]$$

where a is a constant.

For the sum of two random variables and $\eta$, the expected value of the sum may be calculated as $E[\xi+\eta] = E[\xi] + E[\eta]$.

Further: $Var[\xi+\eta] = Var[\xi]+Var[\eta] - 2C(\xi,\eta)$ where

$$C(\xi,\eta) = E[(\xi-\mu_\xi)(\eta-\mu_\eta)]$$

$C(\xi,\eta)$ is designated covariance.

For independent variables: $C(\xi,\eta) = 0$

The expectation value of the product of two random variables $\xi\eta$ is calculated as: $E[\xi\eta] = E[\xi] E[\eta]$ in case the variables are independent.

Further: $Var[\xi\eta] = (E[\xi])^2 Var[\eta] + (E[\eta])^2 Var[\xi] + Var[\xi] Var[\eta]$

If $\xi$ och $\eta$ both are independent and $Var[\xi]$ och $Var[\eta]$ both are positive, the following applies:

$$Var[\xi\eta] = Var[\xi] Var[\eta] \leftrightarrow E[\xi] = E[\eta] = 0$$

The correlation function, as used herein, is a sequence of sums of products:

$$r(s) = \sum \xi_i \eta_{i,s} \text{ if } \mu_\xi = \mu_\eta = 0$$

The summation is made from i =1 to i = L where L is the length of the shortest vector. This calculation is made for a plurality of different s.

The variance of the correlation function is thus calculated as:

$$Var[r(s)] = \sum Var[\xi_i] Var[\eta_{i,s}] = L \sigma_\xi^2 \sigma_\eta^2$$

The standard deviation of the correlation function is thus:

$$\sigma_r = \sigma_\xi \sigma_\eta \sqrt{L}$$

More information may be found in the following reference literature:

"Introduction to Probability and Statistics", J. Susan Milton, Jesse C. Arnold, Mc Graw Hill
"Sannolikhetslära och statistik med tekniska tillampningar", Del 1 och 2, Mats Rudemo, Lennart Råde, Biblioteksförlaget, Stockholm
"Beta, Mathematics Handbook for Science and Engineering", Lennart Råde, Bertil Westergren, Studentlitteratur.

**Complex correlation**

By the use of a complex correlation, a known pattern, such as a watermark, may be found in a signal containing random background noise. If two random variables are independent, their cross correlation is zero. Assuming that the expected value of the random variables is zero, the cross correlation is defined according to what has been described above as $E[\xi\eta]$. It is assumed that a sample of one of the random variables is a vector m, which represents the pattern to be found. A sample of the other random variable is a vector (b+m) constituting a superposition of random noise and the pattern to be found. In case the correlation operation is designated o, the distributive property is defined as:

$$r = m \; o \; (b+m) = m \; o \; b + m \; o \; m$$

If the vector m is now moving along the vector (b+m), the terms mob and mom will mostly be close to zero, except at the location where the vector m is positioned above its corresponding location in the vector (b+m) where the correlation, i.e. mom, will be large.
The correlation between two complex valued vectors is achieved by the handling of the complex numbers as two vectors. The correlation function for two vectors a and b is made up of scalar products:

$$r(s) = \sum a_j b_{s+j-1} \; \text{för s}= 1,2,\dots N-L+1$$

where N is the length of the vector b and L is the length of the shorter pattern vector a.
As the vectors a and b represent complex numbers, the scalar product of the vectors are defined as:

$$\mathrm{Re}(a(i))^* \; \mathrm{Re}(b(i+j-1)) + \mathrm{Im}(a(i))^* \mathrm{Im}(b(i+j-1)$$

where Re and Im represent the real part and the imaginary part, respectively.
This may be derived from the definition of complex correlation, which may be defined as a scalar product r= a$\underline{b}$ where a and b are complex vectors and underlining represents complex conjugation.
When the correlation is perfect, i.e. when both patterns match, the correlation function approximately assumes:

$k_{match}$ = 2 alpha $\sigma_w^2$ le where $\sigma_w$ designates the real part or the imaginary part. The number 2 relates to the fact that both the real part and the imaginary part contributes to the correlation.

The standard deviation of the background correlation is derived from the correlation function at a distance from the position where the patterns match. However, it may also be approximated as:

$$k_{background} = 2 * \mathrm{sqrt}(le) * \sigma_f * \sigma_w$$

where $\sigma_f$ is the standard deviation of the background in the Fourier transform in the interval where the pattern is present. Contributing to the background is the recorded sound file and any watermarks or other patterns, which may have been added to the recorded sound, including the actual pattern under investigation. le is the length of the pattern, and $\sigma_w$ is the standard deviation of the pattern.
For a random variable having a uniform probability distribution over an interval between a and b, the variance is:

$$\sigma_w^2 = (b-a)^2/12.$$

Here b-a=2 and thus the standard deviation is $\sigma_w = 1/\sqrt{3}$.

As a suitable measure of how well the correlation finds the pattern the following ratio is used:

$$k_{norm} = k_{match} / k_{background}$$

The value $k_{norm}$ is indicative for the probability that a match is correct or incorrect.

**Pseudorandom numbers generator**

A pseudorandom number generator is an algorithm, which through iteration generates a series of real numbers, which appears to be random. The randomness is an illusion since the numbers are generated by a deterministic algorithm. Thus, the series of numbers is repetitive, however, for a good pseudorandom number generator the repetitive periods are very long and such a pseudorandom number generator is still capable of generating a series of numbers having a sufficient random character for being useful in statistical algorithms. When the user designates a number called a seed, the algorithm is started at an arbitrary starting position and the series of numbers created by the pseudorandom numbers generator will therefore be reasonably random and very difficult to re-generate without having knowledge of the seed, even if the algorithm behind the pseudorandom numbers generator is known.

Pseudorandom numbers generators are available in mathematical software tools like MATLAB, in programming languages like C++ and the like. These algorithms are well known and if the seed is known, the series of random numbers will be simple to re-generate. The seed must therefore be kept secret, and thus the starting point in the algorithm is secret. The period is very long in these algorithms and thus it will be near impossible to re-generate the series of numbers without knowing the seed.

**Assessment of probability by using extreme value theory**

Supposing a series of N outcomes from N random variables having the same probability distribution, the probability distribution describing the probability that any of the above outcomes exceeds a value x, provided the distribution function for the random variables is F(x), is:

$$F2(x)=1-(F(x))^N$$

When this is applied to correlation, a well known statistical theorem may be used, which states that the distribution function for a sum of random variables having the same distribution function approaches a normal distribution as the number of random variables increases. This applies independently of the characteristics of the original distribution function. In case a large number of elements are included in the correlation, i.e. in case the pattern is large, the above theorem may be used with the normal distribution as F(x).

**Derivation**

First of all, the probability that all outcomes N are less than the value x is calculated. If the random variables are designated $\xi_1, \xi_2 ... \xi_N$ the resulting probabilities may be described as:

$$P(\xi_1<x, \xi_2<x, ...\xi_N<x) = P(\xi_1<x)\, P(\xi_2<x)... P(\xi_N<x)= P(\xi<x)^N = F(x)^N$$

in case all random variables are independent and have the same distribution function F(x).

The probability that any of the random variables is greater than x is then described by:

$$1-P(\xi<x)^N = 1-F(x)^N = F2(x).$$

**Search graphs**

An integer number is typically described as a decimal number having the base 10 or a binary number having the base 2. When searching for a number in a graph structure, a number at a time may be searched successively. A number having 10 decimal digits corresponds to a binary number having approximately 33 binary digits. In a search graph having x levels and y nodes at each level, $y^x$ different numbers may be represented. The choice of x and y is decisive for the search speed in the search graph. Information must be kept of every node in the search graph.

**Sound level of the pattern time function**

The function $y_k(t)$ represents the pattern in the time domain. It is multiplied by a function f(i) that is calculated as a "rolling mean value" of the background level. It is also multiplied by a constant that approximately relates the added function to a specified level below the background. Parseval's formula (see next chapter) is also used to relate the sound level to the pattern level in the frequency domain, which is much faster than calculating the standard deviation of the time domain. The level of the added function as related to the background is given by the user as a value in decibels.

Sound pressure is typically described in dB relative to a reference pressure. The definition is:

$dB = 20 \log^{10}(A/A_0)$ where Ao is a reference amplitude and A is the actual amplitude.

The number 20 is used here instead of 10 since the relation concerns power which corresponds to the square of the amplitude.

It is understood that no watermarking will take place in the sound data during pauses and when the sound pressure is below a prescribed level.

**Parseval's formula**

Parseval's formula states that the energy described in the frequency domain is the same as the energy described in the time domain. It may in the discrete case be formulated as:

$$\sum c_i^2 = (\sum w_j^2)/N$$

where $c_i$ is the amplitude of the time function, $w_j$ is the coefficient of the Fourier transform, N is the number of samples. The formula assumes definitions according to the section discrete Fourier transforms above. The formula allows the noise level of the watermark to be linked with the quantities, which are used for characterizing the watermark, namely amplitude, amplification and length. Since the amplitude is randomly distributed, its variance is used to characterize $w^2$. In theory, the right hand side of the equation will be equal to:

$2*2*le*alpha^2/3/N$

The first number 2 is a result of the use of both the real part and the imaginary part. The second number 2 is a result of the watermark including pairwise conjugated complex numbers. The number 3 is derived from the expression of variance for a uniform random variable between the limits a and b which is $(b-a)^2/12$. Here, b-a = 2 is used.

Summary of the invention

The above object and further objects, which are evident from the below detailed description, are according to a first aspect of the present invention achieved by a method of watermarking an audio track, the audio track forming part of an audible data structure, the method comprising the performing of the steps of:

providing a database structure in the form of a search graph,
providing the audio track,
assigning a unique number X to the audio track for the unique identification of the audio track,
partitioning the unique number X into N positions i, and N values $v_i$, where i=1...N, and,
for each position i of the number X, performing the steps of:

generating a pseudorandom number $R(i, v_i)$ based on the position i and the value $v_i$ at the position i,

adding a new node $[v_i, R(i, v_i)]$ at level i in the database structure, if not already present in the database structure, and adding an edge from the preceding node $[v_{i-1}, R(i-1, v_{i-1})]$ to the new node $[v_i, R(i, v_i)]$,

generating, by using $R(i, v_i)$ as a seed, a set of random complex numbers C and inserting the set of random complex numbers C into a vector V,

calculating the inverse Fourier transform of the vector V to obtain a time domain function y(t), the time domain function y(t) representing the watermark, and

adding the time domain function y(t) to the audio track.

The above mentioned method is based on the search in graph-structures, pseudorandom number generators, Fourier transforms, correlation and extreme value theory. The watermarking is made over a long time period in the audio track, preferably in the range of minutes, whereas the retrieval of the watermarking may be made with the use of significantly shorter portions of the audio track, such as in the range of a few seconds. The audible data structure comprises a number of audio tracks. Each audio track may comprise speech, singing, instrumental music, sound effects or a combination thereof.

The present watermarking technology includes three different parts, namely a search graph administrator, an encoder and a decoder.

The search graph of the database structure is managed by a search graph administrator. The number of levels and the number of nodes in the database structure should be selected in such a way that the time required for traversing the graph is acceptable, while the probability of determining the presence or non-presence of the watermark and the subsequent finding of the correct identification number X is sufficiently high. Each node of the search graph is represented by a unique number. The unique number generates a seed to a pseudorandom number generator. The pseudorandom number generator is an algorithm, which for each seed generates a sequence of numbers, whose properties approximate the properties of sequences of random numbers. The sequences of numbers obtained by a random number are reproducible and it is thus important that the seeds remain secret in order for the generated numbers to appear random.

The sequences of numbers are used to generate a sequence of complex numbers and a further sequence of numbers, which are used for placing the complex numbers in the Fourier transform of the audio track. Due to the multiple randomness it is very difficult to detect the watermark without knowing the seed.

The encoder reads the audio track. The audio track is typically in a digital format such as wav, however other formats are equally feasible. The audio track is being watermarked by the addition of a time domain function y(t) as described above. The time domain function y(t) as described above is superimposed on the existing audio track. The encoder superimposes a watermark in the Fourier transform of the sound file. From a unique seed, the pseudorandom number generator generates a sequence of complex numbers having uniformly distributed, random real and imaginary parts.

Further, for each unique seed a series of pseudorandom integers are derived. The pseudorandom integers are chosen between lower and upper limits corresponding to a lower and an upper frequency limit and coinciding with positions of the Fourier transform of the sound file. The frequency range should be chosen to correspond to ranges at which the sensitivity of the human ear is low while still including some of the frequencies of the original audio track. In this way a background is established for concealing the watermark.

The watermark is consecutively added to the audio track at the calculated positions. Thereby it has to be observed that real sound has a Fourier transform which has a set of complex conjugated coefficients. The watermark must thus have corresponding complex conjugated coefficients in order to maintain this property of the watermarked audio track and it is thus necessary for obtaining a real sound file. The calculated watermark is multiplied with a suitable amplification factor, which is chosen depending on the desired magnitude of the watermark compared to the original sound of the audio track. The factor to be used varies depending on the sensitivity of the noise which the addition of the watermark will be perceived as for a human ear. The added noise from the watermark should preferably be completely unnoticeable for a sensitive ear. Parseval's formula may be used for determining the amplitude of the watermark.

The length of the watermark, the amplitude of the watermark and the frequency range of the watermark should all be considered when a decision is taken on the compromise between acceptable levels of detectability of the watermark versus possible disturbance of the experience of the consumer listening to the watermarked audio track.

In case the generated frequency domain function is shorter than the audio track, the watermark is provided with zeroes in order to have the same length as the audio track before the watermark is being inverse Fourier transformed and superimposed to the audio track. Thereby a time domain function having a noise characteristics and having the same length as the original audio track is achieved. This time domain function is added to the audio track at locations where the audio track includes sound, i.e. the time domain function is not added during pauses in the audio track.

The resulting audio track after the addition of the time domain function will thus have a slightly increased background noise, which will naturally appear at least to some extent in all sound recordings except at the location of the pauses in the audio track. The new watermarked audio track will be stored as a sound file, e.g. in the wav format.

The purpose of the above procedure is to ensure that the watermark cannot be found and removed. The watermark should also remain in case the audio track or the audible data structure is filtered (low-pass, band-pass or high-pass), truncated, compressed and uncompressed, etc. Further, the watermark should not disturb the users experience of the audible data structure. On the contrary, the probability of finding the watermark must be high and require a low amount of time and computational power.

According to a further embodiment of the present invention, the audio track is divided into a plurality of time segments, and the time domain function is being added to each of the time segments.

According to a further embodiment of the present invention, the audio track and/or the time segments are completed with zeroes to form a standard length.

Using a standard length of the watermark will make the decoding simpler, since the length of the watermark must be known in order to make a correct decoding.

According to a further embodiment of the present invention, the audio level of the time domain function y(t) is adjusted to match the level of the background in the audio track using a "rolling mean".

In this way the time domain function may be better concealed in the background of the audio track.

According to a further embodiment of the present invention, the time domain function y(t) is added to the track only at locations in the audio track where the audio level exceeds a threshold value.

In this way it is ensured that the watermark will be well concealed in the audio track.

According to a further embodiment of the present invention, the vector V consists of complex conjugated coefficients.

In this way it may be ensured that the time domain function generated by the inverse Fourier transform represents a true sound.

According to a further embodiment of the present invention, the unique number is in the order of magnitude of 10 digits.

By the use of in the order of magnitude of 10 digits, a sufficient amount of numbers will be available and the ability to distinguish between two numbers will be increased.

The above object and further objects, which are evident from the below detailed description, are, according to a second aspect of the present invention, achieved by a method of determining the presence or non-presence of a watermarked audio track in an audible data structure, the method comprising the steps of:

   providing the audible data structure and a database structure in the form of a search graph, the database structure comprising a plurality of nodes $[v_i, R(i, v_i)]$ at levels i, wherein each $v_i$ forms part of a unique number identifying the watermarked audio track and each $R(i, v_i)$ is a pseudorandom number, the nodes being interconnected by edges in the graph structure,
   traversing the database structure and for each node visited:

      generating a set of pseudorandom complex numbers C,
      inserting the set of pseudorandom complex numbers C into a vector V,
      calculating a Fourier transform F of the audible data structure,
      performing a correlation operation between the Fourier transform F and the vector V,
      determining whether or not the peak value of the correlation operation is statistically significant, and,
      provided that the peak value of the correlation operation is statistically significant, storing the path in the search graph of the database structure for which the peak value of the correlation operation is statistically significant

   determining the presence or non-presence of a watermarked audio track in a song segment based on the presence or non- presence of the stored path in the search graph of the database structure, and,
   provided presence is determined, generating the unique number X based on the stored path in the search graph of the database structure.

The decoder determines whether or not any of the watermarks associated with a path in the search graph is to be found in the audible data structure currently under investigation, and provided the path is found, the unique identification number X is derived from the path. The decoder is capable of retrieving the identification number X of a single audio track even after the audio track has been mixed with other watermarked and non-watermarked audio tracks in order to form an audible data structure.

The decoder does to a large extent perform the same operations as the encoder. The audible data structure is recorded and in case of a multi channel structure, one channel is extracted. The recorded audible data structure is divided into segments. If needed the last segment is padded with zeros to match the segment length.

Thereafter, the Fourier transform of the elongated recorded audible data structure segments is calculated. The Fourier transform transfers the time domain function of the recorded audible data structure to the frequency domain and is expressed as a complex-valued function of frequency, whose absolute value represents the amount of that frequency present in the original function, i.e. the magnitude of the particular sinusoidal frequency present in the recorded audible data structure, and whose complex argument is the phase offset of the basic sinusoid in that frequency. The usable frequency range of the Fourier transform extends to half of the sampling frequency of the audible data structure. (The Nyquist frequency.)

For digital sound recordings of CD quality the sampling frequency will typically be 44100 Hz, which would correspond to an upper limit of the usable Fourier transform frequency of 22050 Hz. The Fourier transform results in a plurality of complex numbers corresponding to the number of samples of the extended audible data structure.

The calculated Fourier transform of the elongated recorded audible data structure will be the sum of the original non-watermarked audio tracks and the superimposed watermark. The decoder will, based on the originally used seed, generate the same watermark as was generated by the encoder. The thus generated watermark will have the same length as the original watermark.

The calculated Fourier transform of the elongated recorded audible data structure will be scanned successively in the frequency range of the original watermark in order to determine whether or not the watermark is present in the elongated recorded audible data structure or not. The procedure used for establishing whether or not the watermark is present is based on statistical correlation and the fact that the watermark and the audible data structure are statistically unrelated, or uncorrelated. The different watermarks, which may have been used for watermarking different audio tracks in the audible data structure, are also practically uncorrelated although being calculated with the use of the same deterministic, pseudorandom method.

The correlation is calculated as the real part of a sum of successive scalar products between the watermark and the conjugate of the Fourier transform. When the watermark is compared with the Fourier transform, the successively calculated correlation will vary randomly. In case the watermark is present in the Fourier transform and it has a sufficient magnitude, the correlation will differ significantly from the random correlations.

The extreme value theory may be used in order to establish the required correlations for determining with a high level of confidence that the watermark is present in the Fourier transform. It has thereby been established that by performing two hundred correlations, the quotient should be at least approximately five. By the use of this condition it may be determined with a high confidence that the watermark is present in the investigated recorded audible data structure.

According to a further embodiment of the present invention, the database structure is traversed using a breadth-first or a depth-first search.

Both breadth-first or a depth-first search may be used when traversing the search graph.

According to a further embodiment of the present invention, the determination whether or not the peak value of the correlation operation is statistically significant is made by comparing the peak value of the correlation operation to the background noise value or the correlation operation.

In this way it may be ensured that the determination is made with a high level of confidence, and thereby the cases of false determination may be substantially avoided.

According to a further embodiment of the present invention, the determination whether or not the peak value of the correlation operation is statistically significant is made by the use of extreme value theory.

Extreme value theory may be used in order to further minimize the risk of a false determination.

The above object and further objects, which are evident from the below detailed description, are according to a third aspect of the present invention achieved by a system for watermarking an audio track, the audio track forming part of an audible data structure, the system comprising:

> a database structure in the form of a search graph,
> an encoding device, the encoding device being capable of:

>> assigning a unique number X to the audio track for the unique identification of the audio track,
>> partitioning the unique number X into N positions i, and N values $v_i$, where i=1...N, and,
>> for each position i of the number X, performing the steps of:

>>> generating a pseudorandom number $R(i, v_i)$ based on the position i and the value $v_i$ at the position i,
>>> if not already present in the database structure, adding a new node $[v_i, R(i,v_i)]$ at level i in the database structure and adding an edge from the preceding node $[v_{i-1}, R(i-1,v_{i-1})]$ to the new node $[v_i, R(i,v_i)]$,
>>> generating, by using $R(i, v_i)$ as a seed, a set of random complex numbers C and inserting the set of random complex numbers C into a vector V,
>>> calculating the inverse Fourier transform of the vector V to obtain a time domain function y(t), the time domain function y(t) representing the watermark, and
>>> adding the time domain function y(t) to the audio track.

The above system according to the third aspect may be used together with the above method according to the first aspect.

The above object and further objects which are evident from the below detailed description are according to a fourth aspect of the present invention achieved by a system of determining the presence or non-presence of a watermarked audio track in an audible data structure, the system comprising:

a database structure in the form of a search graph, the database structure comprising a plurality of nodes [$v_i$, R(i, $v_i$)] at levels i, wherein each $v_i$ forms part of a unique number identifying the watermarked audio track and each R(i, $v_i$) is a pseudorandom number, the nodes being interconnected by edges in the graph structure, and

a decoding device, the decoding device being capable of:

traversing the database structure and for each node visited:

generating a set of pseudorandom complex numbers C,
inserting the set of pseudorandom complex numbers C into a vector V,
calculating a Fourier transform F of the audible data structure,
performing a correlation operation between the Fourier transform F and the vector V,
determining whether or not the peak value of the correlation operation is statistically significant, and,
provided that the peak value of the correlation operation is statistically significant, storing the path in the search graph of the database structure for which the peak value of the correlation operation is statistically significant,

determining the presence or non-presence of a watermarked audio track in a song segment based on the presence or non-presence of the stored path in the search graph of the database structure, and

provided presence is determined, generating the unique number X based on the stored path in the search graph of the database structure.

The above system according to the fourth aspect may be used together with the above method according to the second aspect.

The above object and further objects which are evident from the below detailed description are according to a fifth aspect of the present invention achieved by a database structure in the form of a search graph, the database structure comprising a plurality of nodes [$v_i$, R(i, $v_i$)] at levels i, wherein each $v_i$ forms part of a unique number identifying a watermarked audio track and each R(i, $v_i$) is a pseudorandom number, the nodes being interconnected by edges in the graph structure.

The above database structure is preferably stored and managed by a server or similar computer.

The above object and further objects, which are evident from the below detailed description, are according to a sixth aspect of the present invention achieved by an audio track comprising a recorded sound and a superimposed time domain function y(t), the time domain function y(t) being derived by:

assigning a unique number X to the audio track for uniquely identifying the audio track,
partitioning the unique number X into N positions i, and N values $v_i$, where i=1...N, and,
for each position i of the number X, performing the steps of:

generating a pseudorandom number R(i, $v_i$) based on the position i and the value $v_i$ at the position i,
generating, by using R(i, $v_i$) as a seed, a set of random complex numbers C and inserting the set of random complex numbers C into a vector V,
calculating the inverse Fourier transform of the vector V to obtain a time domain function y(t), the time domain function

representing the watermark, and

adding the time domain function y(t) to the audio track.

According to the present invention, the above mentioned problems are solved by adding to each audio track a watermark defined by a time domain noise signal y(t), which is generated first in the frequency domain based on pseudorandom numbers derivable from the partitioning and positioning in a search graph of each audio track's unique ID number. Determining the unique ID number associated with the watermark comprises generating, sequentially and for the nodes, i.e. the parts of the ID number in the search graph, candidate noise signals for correlating, in the frequency domain, with a frequency domain transform of the investigated song. Statistically significant correlation results identify parts of an ID number present in the song, wherefrom the audio track's unique ID number can be determined and the audio track identified.

Brief description of the drawings

    FIG. 1 is a flow chart describing the working principle of the encoder.
    FIG. 2 is an example of encoding using the search graph.
    FIG. 3 is a flow chart describing the working principle of the decoder.

Detailed description of the drawings

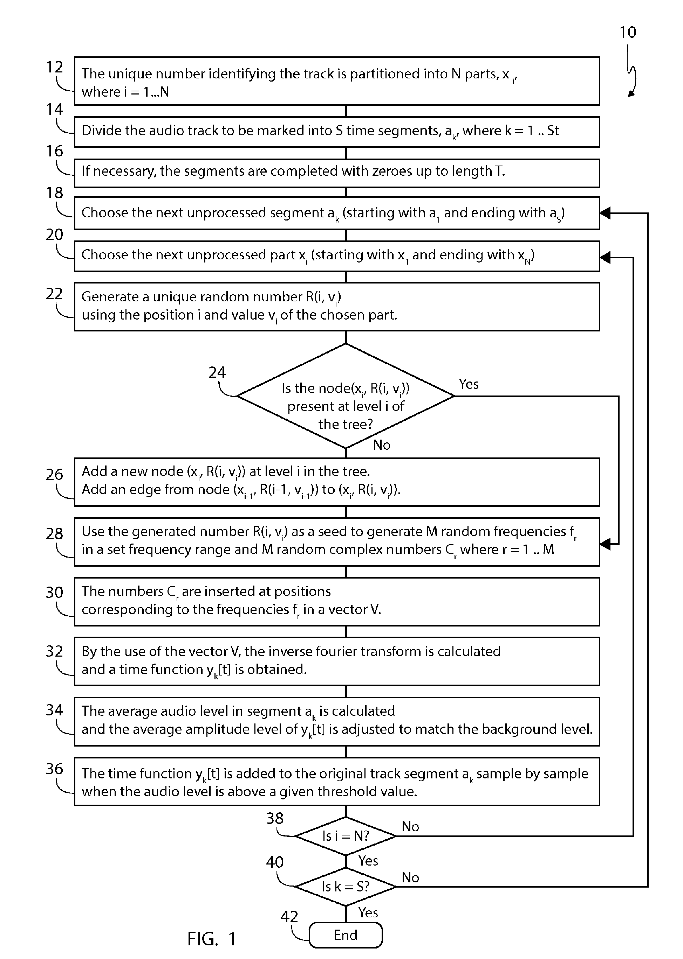

FIG. 1 shows a flow chart 10 describing the working principle of the encoder. The encoder starts by reading an audio track in the form of a sampled sound file, e.g. in wav format. The user indicates how many samples of the file should be read. The audio track is further designated a unique number identifying the audio track. This number is kept secret. In case the audio track comprises multiple channels, e.g. stereo or 5.1 sound or the like, each channel is processed separately. The same unique identifier is used in all channels.

In the next step 12, the unique number identifying the audio track is partitioned into N parts, $x_i$, where i=1...N. In the next step 14, the audio track is divided into S time segments, $a_k$, where k=1..S. In step 16, if necessary, the segments are completed with zeroes up to length T.

Then, a first loop 18 is started in which the next unprocessed segment is chosen, starting with $a_1$ and ending with as. A second loop 20 is started within the first loop. In the second loop the next unprocessed part $x_i$ of the unique number is chosen, starting with $x_1$ and ending with $x_N$. Then, in step 22 inside the loops, a unique pseudorandom number $R(i,v_i)$ is created by the use of the position i and the value $v_i$ of the chosen part $x_i$.

In the next step 24, the encoder checks whether or not the node $(x_i, R(i,v_i))$ is present at level i of the search graph. If this is not the case, the next step 26 is to add the new node $(x_i, R(i,v_i))$ in the search graph and add an edge from the node $(x_{i-1}, R(i-1,v_{i-1}))$ on the previous level in the search graph to the node $(x_i, R(i,v_i))$, except if node $(x_i, R(i,v_i))$ is on the first level, in which case the edge is added from the root of the search graph to the $(x_i, R(i,v_i))$ on the first level. In case the node $(x_i, R(i,v_i))$ is already present in the search graph, the step 26 is skipped.

In the next step 28, the generated number $R(i,v_i)$ is used as a seed to generate M random frequencies $f_r$ in a set frequency range and M random complex numbers $C_r$ where r=1..M. In the next step 30, the numbers $C_r$ are inserted at positions corresponding to the frequencies $f_r$ in a vector V. In the next step 32, the inverse Fourier transform of the vector V is calculated, whereby a time function $y_k[t]$ is obtained.

In the next step 34, the average audio level in the segment $a_k$ is calculated and the average amplitude level of $y_k[t]$ is adjusted to match the background level. In the next step 36, the time function $y_k[t]$ is added to the audio track segment $a_k$, sample by sample, when the audio level is above a given threshold value. In step 38 the second loop, i.e. the inner loop, ends when i=N, i.e. when all parts of the unique number have been processed. In step 40 the first loop, i.e. the outer loop, ends when k=S, i.e. when all segments of the audio track have been processed. Thereafter, in step 42, the track has been encoded.

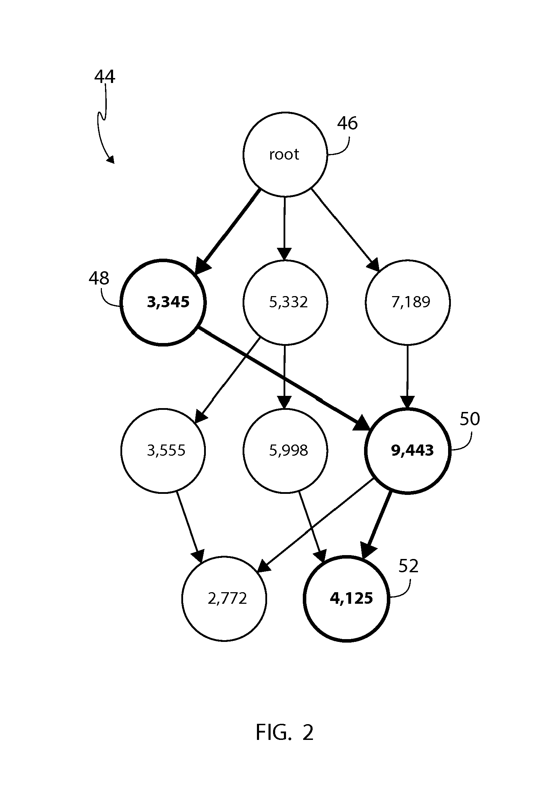

FIG. 2 shows an example of encoding by using the search graph 44. The initial level of the search graph is designated level 0 and constitutes the root node at which the search graph is started. The audio track has in this simplified example been designated the identifying number 394, i.e. three digits, however, it is readily understood that in practice, more digits will be required, such as ten significant digits. The number 394 is partitioned as $x_1$=3, $x_2$=9, $x_3$=4. At level 1, a new node 48 is created and a pseudo random number is generated based on the seed being the position of $x_1$, which is equal to the level in the search graph, namely 1, and the value of $x_1$ being $v_1$=3. In the present case, the pseudorandom number generated is 345. This number is used in the vector V to generate the complex numbers C and the corresponding frequencies f.

At level 2, a new node 50 is created and a new pseudo random number is generated based on the seed being the position of $x_2$, i.e. 2, and the value of $x_2$ being $v_2$=9. The pseudorandom number thus generated is 443. At level 3, a new node 52 is created and a new pseudo random number is generated based on the seed being the position of $x_3$, i.e. 3, and the value of $x_3$ being $v_3$=4. The pseudorandom number thus generated is 125.

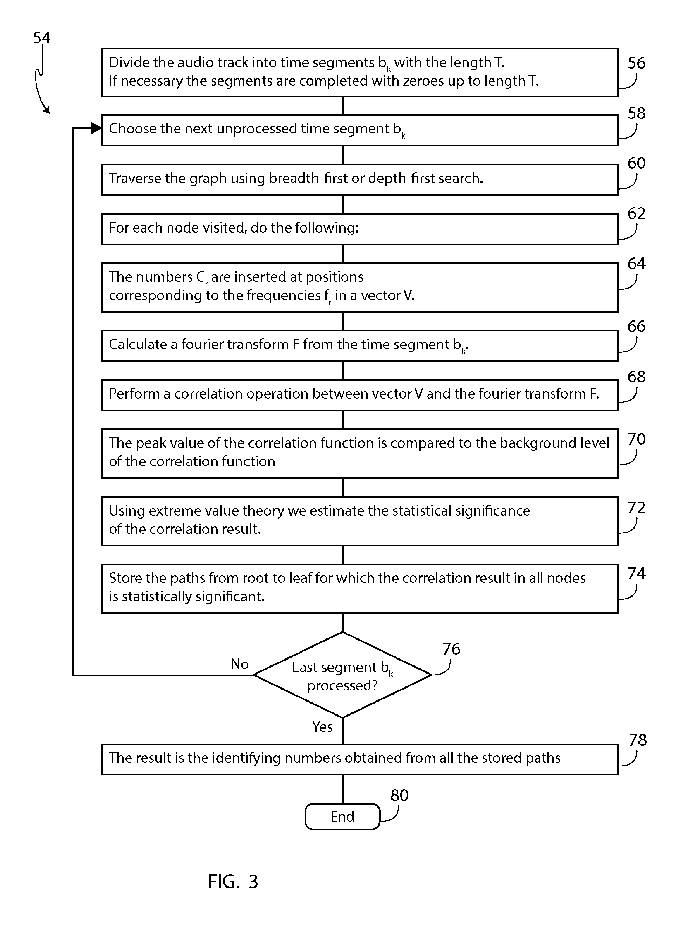

FIG. 3 shows a flow chart 54 describing the working principle of the decoder. The decoder starts by reading an audio track or an audible data structure in the form of a sampled sound file, e.g. in wav format. In the first step 56 the audio track (or an audible data structure) is divided into time segments $b_k$ with the length T. If necessary, the segments are completed with zeroes up to a length T.

Then a loop 58 is started by the choosing of the next unprocessed time segment $b_k$. In the next step 60, the search graph is traversed by the use of either a breadth-first or a depth-first search. For each node visited, the following steps 62 are performed:

For each node in the first step 64 the numbers $C_r$ are inserted at positions corresponding to the frequencies $f_r$ in a vector V. In the second step 66 a Fourier transform F is calculated from the time segment $b_k$ of the audio track or the audible data structure. In the third step 68 a correlation operation is performed between vector V and the Fourier transform F. In the fourth step 70 the peak value of the correlation function is compared to the background level of the correlation function. In the fifth step 72, the statistical significance of the correlation results is estimated by the use of extreme value theory.

Then, in step 74, the paths from root to leaf, for which the correlation results in all nodes are statistically significant, are stored. The above steps 76 are repeated for all segments $b_k$ of the audio track or the audible data structure. Finally, in step 78, based on the stored paths, if any, a determination is made whether or not any of the identification numbers are present in the audio track or the audible data structure, and, in such case, determining which number is present and the statistical significance. Thereafter the decoding 80 is ended.

Reference numerals

10. Flow chart illustrating the encoding.
12. The unique number identifying the audio track is partitioned into N parts, $x_i$, where i=1...N.
14. Divide the audio track to be marked into S time segments, $a_k$, where k = 1 .. St.
16. If necessary, the segments are completed with zeroes up to length T.
18. Choose the next unprocessed segment $a_k$ (starting with $a_1$ and ending with as).
20. Choose the next unprocessed part $x_i$ (starting with $x_1$ and ending with $x_N$).
22. Generate a unique random number $R(i, v_i)$ using the position i and value $v_i$ of the chosen part.
24. Is the node $(x_i, R(i, v_i))$ present at level i of the graph; Yes (-> 28) / No (-> 26).
26. Add a new node $(x_i, R(i, v_i))$ at level i in the graph. Add an edge from node $(x_{i-1}, R(i-1, v_{i-1}))$ to $(x_i, R(i, v_i))$.
28. Use the generated number $R(i, v_i)$ as a seed to generate M random frequencies $f_r$ in a set frequency range and M random complex numbers $C_r$ where r = 1 .. M.
30. The numbers C are inserted at positions corresponding to the frequencies $f_r$ in a vector V.
32. By the use of the vector V, the inverse fourier transform is calculated and a time function $y_k[t]$ is obtained.
34. The average audio level in segment $a_k$ is calculated and the average amplitude level of yk[t] is adjusted to match the background level.
36. The time function yk[t] is added to the original track segment $a_k$ sample by sample when the audio level is above a given threshold value.
38. Is l = N?; Yes (-> 40) / No (-> 20).
40. Is k = S?; Yes (-> 42) / No (-> 18).
42 End.
44. Search graph.
46. Root.
48. Node at level 1.
50. Node at level 2.
52. Node at level 3.
54. Flow chart illustrating the decoding.
56. Divide the audio track into time segments $b_k$ with the length T. If necessary the segments are completed with zeroes up to length T.
58. Choose the next unprocessed time segment $b_k$.
60. Traverse the graph using breadth-first or depth-first search.
62. For each node visited, do the following:
64. The numbers $C_r$ are inserted at positions corresponding to the frequencies $f_r$ in a vector V.
66. Calculate a fourier transform F from the time segment $b_k$.
68. Perform a correlation operation between vector V and the fourier transform F.
70. The peak value of the correlation function is compared to the background level of the correlation function.
72. Using extreme value theory we estimate the statistical significance of the correlation result.
74. Store the paths from root to leaf for which the correlation result in all nodes is statistically significant.
76. Last segment $b_k$ processed?; Yes (-> 78) / No (-> 58).
78. The result is the identifying numbers obtained from all the stored paths.
80. End

**Claims**

1. A method of watermarking an audio track, said audio track forming part of an audible data structure, said method comprising the performing of the steps of:

   providing a database structure in the form of a search graph,
   providing said audio track,
   assigning a unique number X to said audio track for the unique identification of said audio track,
   partitioning said unique number X into N positions i, and N values $v_i$, where i=1...N, and,
   for each position i of said number X, performing the steps of:

   generating a pseudorandom number $R(i, v_i)$ based on said position i and said value $v_i$ at said position i,
   adding a new node $[v_i, R(i,v_i)]$ at level i in said database structure, if it is not already present in said database structure, and adding an edge from the preceding node $[v_{i-1}, R(i-1,v_{i-1})]$ to said new node $[v_i,R(i,v_i)]$,
   generating, by using $R(i, v_i)$ as a seed, a set of random complex numbers C and inserting said set of random complex numbers C into a vector V,
   calculating the inverse Fourier transform of said vector V to obtain a time domain function y(t), said time domain function y(t) representing said watermark, and
   adding said time domain function y(t) to said audio track.

2. The method according to claim 1, wherein said audio track is divided into a plurality of time segments, and said time domain function is being added to each of said time segments.

3. The method according to any of the preceding claims, wherein said audio track and/or said time segments are completed with zeroes to form a standard length.

4. The method according to any of the preceding claims, wherein the audio level of said time domain function y(t) is continuously adjusted to match the level of the background in said audio track.

5. The method according to any of the preceding claims, wherein said time domain function y(t) is added to said track only at locations in said audio track where the audio level exceeds a threshold value.

6. The method according to any of the preceding claims, wherein said vector V consists of complex conjugated coefficients.

7. The method according to any of the preceding claims, wherein said unique number is in the order of magnitude of 10 digits.

8. A method of determining the presence or non-presence of a watermarked audio track in an audible data structure, said method comprising the steps of:

   providing said audible data structure and a database structure in the form of a search graph, said database structure comprising a plurality of nodes $[v_i, R(i, v_i)]$ at levels i, wherein each $v_i$ forms part of a unique number identifying said watermarked audio track and each $R(i, v_i)$ is a pseudorandom number, said nodes being interconnected by edges in the graph structure,
   traversing said database structure and for each node visited:

   generating a set of pseudorandom complex numbers C,
   inserting said set of pseudorandom complex numbers C into a vector V,
   calculating a Fourier transform F of said audible data structure,
   performing a correlation operation between said Fourier transform F and said vector V,
   determining whether or not the peak value of the correlation operation is statistically significant, and,
   provided that the peak value of the correlation operation is statistically significant, storing the path in the search graph of said database structure for which the peak value of said correlation operation is statistically significant

   determining the presence or non-presence of a watermarked audio track in a song segment based on the presence or non- presence of the stored path in the search graph of said database structure and,

provided presence is determined, generating said unique number X based on the stored path in the search graph of said database structure.

9. The method according to claim 8, wherein said database structure is traversed by the use of a breadth-first or a depth-first search.

10. The method according to any of the claims 8-9, wherein the determination, whether or not the peak value of the correlation operation is
statistically significant, is made by the comparison of the peak value of the correlation operation to the background noise value or the correlation operation.

11. The method according to any of the claims 8-10, wherein the determination, whether or not the peak value of the correlation operation is
statistically significant, is made by the use of extreme value theory.

12. A system for watermarking an audio track, said audio track forming part of an audible data structure, said system comprising:

a database structure in the form of a search graph,
an encoding device, said encoding device being capable of:

assigning a unique number X to said audio track for the unique identification of said audio track,
partitioning said unique number X into N positions i, and N values $v_i$, where i=1...N, and,
for each position i of said number X, performing the steps of:

generating a pseudorandom number $R(i, v_i)$ based on said position i and said value $v_i$ at said position i,
if not already present in said database structure, adding a new node $[v_i, R(i,v_i)]$ at level i in said database structure and adding an edge from the preceding node $[v_{i-1}, R(i-1,v_{i-1})]$ to said new node $[v_i, R(i,v_i)]$,
generating, by using $R(i, v_i)$ as a seed, a set of random complex numbers C and inserting said set of random complex numbers C into a vector V,
calculating the inverse Fourier transform of said vector V to obtain a time domain function y(t), said time domain function y(t) representing said watermark, and
adding said time domain function y(t) to said audio track.

13. A system of determining the presence or non-presence of a watermarked audio track in an audible data structure, said system comprising:

a database structure in the form of a search graph, said database structure comprising a plurality of nodes $[v_i, R(i, v_i)]$ at levels i, wherein each $v_i$ forms part of a unique number identifying said watermarked audio track and each $R(i, v_i)$ is a pseudorandom number, said nodes being interconnected by edges in the graph structure, and
a decoding device, said decoding device being capable of:

traversing said database structure and for each node visited:

generating a set of pseudorandom complex numbers C,
inserting said set of pseudorandom complex numbers C into a vector V,
calculating a Fourier transform F of said audible data structure,
performing a correlation operation between said Fourier transform F and said vector V,
determining whether or not the peak value of the correlation operation is statistically significant, and,
provided the peak value of the correlation operation is statistically significant, storing the path in the search graph of said database structure for which the peak

value of said correlation operation is statistically significant,

determining the presence or non-presence of a watermarked audio track in a song segment based on the presence or non- presence of the stored path in the search graph of said database structure, and
provided presence is determined, generating said unique number X based on the stored path in the search graph of said database structure.

**14.** A database structure in the form of a search graph, said database structure comprising a plurality of nodes [$v_i$, R(i, $v_i$)] at levels i, wherein each $v_i$ forms part of a unique number identifying a watermarked audio track and each R(i, $v_i$) is a pseudorandom number, said nodes being interconnected by edges in the graph structure.

**15.** An audio track comprising a recorded sound and a superimposed time domain function y(t), said time domain function y(t) being derived by:

assigning a unique number X to said audio track for uniquely identifying said audio track,
partitioning said unique number X into N positions i, and N values $v_i$, where i=1...N, and,
for each position i of said number X, performing the steps of:

generating a pseudorandom number R(i, $v_i$) based on said position i and said value $v_i$ at said position i,
generating, by using R(i, $v_i$) as a seed, a set of random complex numbers C and inserting said set of random complex numbers C into a vector V,
calculating the inverse Fourier transform of said vector V to obtain a time domain function y(t), said time domain function representing said watermark, and
adding said time domain function y(t) to said audio track.

10

12  The unique number identifying the track is partitioned into N parts, $x_i$, where i = 1...N

14  Divide the audio track to be marked into S time segments, $a_k$, where k = 1 .. St

16  If necessary, the segments are completed with zeroes up to length T.

18  Choose the next unprocessed segment $a_k$ (starting with $a_1$ and ending with $a_S$)

20  Choose the next unprocessed part $x_i$ (starting with $x_1$ and ending with $x_N$)

22  Generate a unique random number $R(i, v_i)$ using the position i and value $v_i$ of the chosen part.

24  Is the node($x_i$, $R(i, v_i)$) present at level i of the tree? — Yes

No

26  Add a new node ($x_i$, $R(i, v_i)$) at level i in the tree.
Add an edge from node ($x_{i-1}$, $R(i-1, v_{i-1})$) to ($x_i$, $R(i, v_i)$).

28  Use the generated number $R(i, v_i)$ as a seed to generate M random frequencies $f_r$ in a set frequency range and M random complex numbers $C_r$ where r = 1 .. M

30  The numbers $C_r$ are inserted at positions corresponding to the frequencies $f_r$ in a vector V.

32  By the use of the vector V, the inverse fourier transform is calculated and a time function $y_k[t]$ is obtained.

34  The average audio level in segment $a_k$ is calculated and the average amplitude level of $y_k[t]$ is adjusted to match the background level.

36  The time function $y_k[t]$ is added to the original track segment $a_k$ sample by sample when the audio level is above a given threshold value.

38  Is i = N? — No

Yes

40  Is k = S? — No

Yes

42  End

FIG. 1

FIG. 2

54

| Divide the audio track into time segments $b_k$ with the length T. If necessary the segments are completed with zeroes up to length T. | 56 |

| Choose the next unprocessed time segment $b_k$ | 58 |

| Traverse the graph using breadth-first or depth-first search. | 60 |

| For each node visited, do the following: | 62 |

| The numbers $C_r$ are inserted at positions corresponding to the frequencies $f_r$ in a vector V. | 64 |

| Calculate a fourier transform F from the time segment $b_k$. | 66 |

| Perform a correlation operation between vector V and the fourier transform F. | 68 |

| The peak value of the correlation function is compared to the background level of the correlation function | 70 |

| Using extreme value theory we estimate the statistical significance of the correlation result. | 72 |

| Store the paths from root to leaf for which the correlation result in all nodes is statistically significant. | 74 |

No ◇ Last segment $b_k$ processed? 76

Yes

| The result is the identifying numbers obtained from all the stored paths | 78 |

( End ) 80

FIG. 3

Europäisches
Patentamt

European
Patent Office

Office européen
des brevets

# EUROPEAN SEARCH REPORT

Application Number

EP 15 18 1611

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIM W-G ET AL: "AN AUDIO WATERMARKING SCHEME ROBUST TO MPEG AUDIO COMPRESSION", PROCEEDINGS OF THE IEEE-EURASIP WORKSHOP ON NONLINEAR SIGNAL ANDIMAGE PROCESSING, XX, XX, vol. 1, 1 January 1999 (1999-01-01), pages 326-330, XP000979677, * abstract * * section 3.1 and 3.2 * ----- | 1,8, 12-15 | INV. G10L19/018 G11B20/00 |
| A | QUAN X ET AL: "STATISTICAL AUDIO WATERMARKING ALGORITHM BASED ON PERCEPTUAL ANALYSIS", PROCEEDINGS OF THE 5TH. ACM WORKSHOP ON DIGITAL RIGHTS MANAGEMENT. DRM'05. ALEXANDRIA, VA, NOV.7, 2005; [PROCEEDINGS OF THE ACM WORKSHOP ON DIGITAL RIGHTS MANAGEMENT. (DRM)], NEW YORK, NY : ACM, US, 7 November 2005 (2005-11-07), pages 112-118, XP001503030, DOI: 10.1145/1102546.1102565 ISBN: 978-1-59593-230-3 * abstract * * section 3.1 1) * ----- | 1,8, 12-15 | |
| A,D | US 7 844 052 B2 (TAPSON DANIEL W [GB]) 30 November 2010 (2010-11-30) * abstract; claims 1,2,15,16,17 * * column 1, lines 20-27 * * column 1, lines 55-61 * ----- | 1,8, 12-15 | TECHNICAL FIELDS SEARCHED (IPC) G10L G06F H04L G11B |

The present search report has been drawn up for all claims

| Place of search | Date of completion of the search | Examiner |
|---|---|---|
| The Hague | 16 February 2016 | Van Doremalen, Hans |

EPO FORM 1503 03.82 (P04C01)

## ANNEX TO THE EUROPEAN SEARCH REPORT
## ON EUROPEAN PATENT APPLICATION NO.

EP 15 18 1611

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2016

| Patent document cited in search report | | Publication date | Patent family member(s) | | Publication date |
|---|---|---|---|---|---|
| US 7844052 | B2 | 30-11-2010 | GB<br>US | 2419764 A<br>2007098158 A1 | 03-05-2006<br>03-05-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8925102 B2
- US 2013152210 A1
- CN 1870132 A
- US 8750630 B2
- US 8499159 B2
- EP 0855681 B1
- EP 0766468 B1
- US 7844052 B2